# EUROPEAN PATENT SPECIFICATION

(11) **EP 0 305 451 B1**
(45) Date of publication and mention of the grant of the patent: **01.06.1994**
(21) Application number: 88902367.7
(22) Date of filing: 10.03.1988
(51) Int. Cl.: A23L 1/18, A23L 1/164, A23L 1/216, A23L 1/217, A23P 1/14

(54) **METHOD OF PRODUCING A LAMINAR HOLLOW SNACK FOOD**
VERFAHREN ZUR HERSTELLUNG EINES LAMINIERTEN HOHLEN SNACK-NAHRUNGSMITTELS
PROCEDE DE PRODUCTION D'UN ALIMENT DE SNACK CREUX EN COUCHES

(30) Priority: 10.03.1987 AU 752/87
(43) Date of publication of application: 08.03.1989
(73) Proprietor: M.J. QUINLAN & ASSOCIATES PTY. LIMITED, Gymea Bay, NSW 2227 (AU)
(72) Inventor: QUINLAN, Michael, John, Gymea Bay, NSW 2227 (AU)
(74) Representative: Jenkins, Peter David
(86) International application number: AU8800064
(87) International publication number: WO8806849

(56) References cited:
- AU-A- 4 821 285
- AU-B- 4 477 485
- FR-A- 2 303 479
- GB-A- 2 018 562
- US-A- 3 450 538
- US-A- 3 512 990
- US-A- 3 925 567
- US-A- 4 044 166
- US-A- 4 303 690
- US-A- 4 381 906
- US-A- 4 382 768
- PATENT ABSTRACTS OF JAPAN, vol. 4, no. 46 (C-6)[528], page 82 C 6;& JP-A-55 19 015 (ROTTE K.K.) 09-02-1980
- English translation of JP-A-55 19015

## Description

The present invention relates to a new method of food manufacture and to foods produced by this new method.

It is known to produce fabricated potato crisps, corn chips and other snack foods by mixing potato and/or cereal granules, flakes or starches with water and other customary additives, shaping the resultant material by rolling or extrusion, and cutting the material to the desired size. The shaped material is then cooked by frying or another suitable process to yield the snack food.

It is an aim of the present invention to provide a method of producing a hollow snack food article, thus reducing the amount of raw materials required for the production of a given volume of snack food and also to provide a method of producing new and novelty shaped snack food articles, thus facilitating the opportunity for increased consumer sales.

JP-A-5519015 (ROTTE K.K.) discloses a method of manufacturing a hollow snack food. A dough is made by mixing starch and water. The dough is then formed into two sheets of specific width which are laid one upon the other with a layer of flour sprinkled between. The layered material is then cut into the desired shapes with a pastry cutter; this action seals the cut edges of the layered material. The shaped layered material is then baked to form a hollow snack food.

The present invention provides a method of producing a self-supporting hollow totally enclosed and shaped food article comprising the steps of: (a) preparing a mixture consisting of a starch- containing material and water; (b) rolling or extruding the said mixture under sufficient pressure to form first and second layers of material thereby causing hydrogen bonding (retrogradation) between amylose molecules in said starch-containing material to form a matrix of said starch-containing material and water wherein sufficient of the amylose molecules are thus bound so that the surfaces of the layers of material formed are not sticky and exhibit low mutual affinities if said layers are placed continguously with opposed surfaces in contact with each other; (c) forming a layered material by directly contacting the opposed surfaces of said first and second layers; (d) forming an uncooked shaped food article by cutting and shaping the layered material thereby totally sealing and bonding adjacent layers continuously around the entire extreme peripheral edges thereof; and (e) cooking the shaped food article such that steam is generated within the food article during the cooking sufficient to force the surfaces of the first and second layers apart at the central areas while maintaining the bond between the adjacent layers at the extreme peripheral edges of the shaped food article, thereby to form a self-supporting hollow totally enclosed and shaped food article.

Preferably, between the forming step (d) and the cooking step (e) the food article is dried so that the shaped food article is in the form of a stable uncooked snack pellet suitable for storage and transport.

Preferably, the starch-containing material comprises a mixture of at least one of vegetable or cereal sourced granules, flakes or starches.

More preferably, the starch-containing material comprises a mixture of at least one of potato granules, flakes and starches.

Preferably, the starch containing material is potato solids, the moisture content of the shaped food article before cooking is from 30% to 50% of its total weight, and the first and second layers each have a thickness of from 0.1 to 1.0 mm.

Preferably, the layered material is formed by extruding a tube which is then flattened.

Preferably, the shaped food article is cooked by frying in cooking oil at a temperature of from 160 degrees C to 200 degrees C for 10 to 300 seconds.

By selecting a suitable mixture of ingredients, such as a mixture of starch-containing vegetable or cereal granules, and/or flakes together with suitable emulsifiers and other additives customary in food processing and extruding or rolling the mixture under sufficient pressure, it is possible to produce a sheet of material that exhibits a reduced affinity for sheets of the same material and will not stick to the other sheet when two or more layers are subsequently contiguously positioned to form a layered sheet of material. Preferably, the starch-containing material comprises a mixture of potato and/or suitable cereal granules, flakes or starches. The material may also contain suitable emulsifiers or modifying agents.

In one embodiment, the method of the invention provides rolling or extruding a material comprising starch containing vegetable or cereal solids to form at least one layer of said material, contiguously positioning at least two layers to form a layered material wherein each of said layers is separable from the adjacent layer(s), cutting said layered material to form an uncooked food article and cooking the food article in a manner such that steam generated within the food article during cooking forces adjacent layers apart at a point remote from the extremities of the food article while retaining contact between adjacent layers at the extremities of the food article.

In another embodiment, the starch-containing material may be extruded to form a tube which is then passed through at least one set of rollers to form layered material and which may be cut into the desired shape and cooked.

In another embodiment the layered material may then be cut to shape and the uncooked food articles passed through a drier to yield a stable pellet suitable for storage and transport prior to being cooked and packaged.

### Example 1.

Previously processed and dried potato solids with a moisture content of approximately 15-20% were rehydrated by adding water in the range of 30 to 50 weight-% relative to the total of potato solids plus added water. The mixture was then passed through a series of rollers to produce a sheet of material with a thickness of from about 0.1 to 1.0 mm. The sheet was then layered onto itself and the resultant layered material lightly rolled before being cut to the desired shape and fried in cooking oil at approximately 160 to 200°C for 10 to 300 seconds depending on the texture and other properties required. The steam generated during cooking forced the layers apart to form a hollow food article.

It is believed than the method as exemplified in Example 1 works due to retrogradation of the starch. Naturally occuring starch consists mainly of two basic polymers known as amylose and amylopectin. Amylose is a relatively large linear polymer of anhydroglucose units linked through 1,4 -glucidic bonds with each monomeric unit containing primary and secondary hydroxyl groups except the end units of the chain.

The hydroxyl groups impart hydrophilic properties. However, because the molecules of amylose are linear they may become oriented parallel to one another and significant hydrogen bonding may occur between the polymers. When this occurs, the affinity of the amylose molecules for water is reduced. This phenomenon is commonly referred to as retrogradation.

In the method as exemplified in Example 1, the initial rehydration and forming steps produce a strong, stable sheet of material wherein retrogradation of the amylose molecules significantly reduces the surface's affinity for bonding. Subsequent layering of one sheet on another produces only a relatively weak bond between the surfaces, allowing the layers to be forced apart by steam, generated during the cooking process.

Cutting of the layered material destroys the laminations in the vicinity of the cut and welds the layers together at the edge of the food article. This assists in trapping steam between the layers during cooking.

## Claims

1. A method of producing a self-supporting hollow totally enclosed and shaped food article comprising the steps of:
(a) preparing a mixture consisting of a starch-containing material and water;
(b) rolling or extruding the said mixture under sufficient pressure to form first and second layers of material thereby causing hydrogen bonding (retrogradation) between amylose molecules in said starch-containing material to form a matrix of said starch-containing material and water wherein sufficient of the amylose molecules are thus bound so that the surfaces of the layers of material formed are not sticky and exhibit low mutual affinities if said layers are placed continguously with opposed surfaces in contact with each other;
(c) forming a layered material by directly contacting the opposed surfaces of said first and second layers;
(d) forming an uncooked shaped food article by cutting and shaping the layered material thereby totally sealing and bonding adjacent layers continuously around the entire extreme peripheral edges thereof; and
(e) cooking the shaped food article such that steam is generated within the food article during the cooking sufficient to force the surfaces of the first and second layers apart at the central areas while maintaining the bond between the adjacent layers at the extreme peripheral edges of the shaped food article, thereby to form a self-supporting hollow totally enclosed and shaped food article.

2. A method according to claim 1 wherein between the forming step (d) and the cooking step (e) the food article is dried so that the shaped food article is in the form of a stable uncooked snack pellet suitable for storage and transport.

3. A method according to any foregoing claim wherein the layered material is formed by extruding a tube which is then flattened.

4. A method according to any foregoing claim wherein the shaped food article is cooked by frying in cooking oil at a temperature of from 160 degrees C to 200 degrees C for 10 to 300 seconds.

5. A method according to claim 1 wherein the starch containing material is potato solids, the moisture content of the shaped food article before cooking is from 30% to 50% of its total weight, and the first and second layers each have a thickness of from 0.1 to 1.0 mm.

6. A method according to any foregoing claim wherein the starch-containing material comprises a mixture of at least one of vegetable or cereal sourced granules, flakes or starches.

7. A method acccording to any one of claims 1 to 5 wherein the starch-containing material comprises a mixture of at least one of potato granules, flakes and starches.

## Patentansprüche

1. Ein Verfahren zur Herstellung von einzelnen hohlen, vollständig geschlossenen und geformten Lebensmittelartikeln, das folgende Schritte umfaßt:
(a) Bereitung einer Mischung aus stärkehaltigem Material und Wasser. (b) Ausrollen oder Extrudieren dieser Mischung unter
ausreichendem Druck zur Formgebung einer ersten und zweiten Materialschicht unter Bildung von Wasserstoffbrückenbindungen (Retrogradierung) zwischen Amylosemolekülen in dem stärkehaltigen Material zur Bildung einer Matrix aus dem besagten stärkehaltigen Material und Wasser, wobei so ausreichend viele Amylosemoleküle gebunden werden, daß die Oberflächen der Materialschichten nicht klebrig sind und eine geringe gegenseitige Affinität aufweisen, wenn die besagten Materialschichten mit der jeweiligen Gegenseite der anderen Materialschicht in Kontakt gebracht werden;
(c) Formung eines aus Schichten bestehenden Materials durch direktes Aufbringen der Gegenseiten der besagten ersten und zweiten Schicht;
(d) Formung eines ungegarten geformten Lebensmittelartikels durch Schneiden und Formen des aus Schichten bestehenden Materials, wobei eine vollständige Abdichtung und Bindung der aufeinanderliegenden Schichten entlang der gesamten Außenkante stattfindet; und
(e) Garen des geformten Lebensmittelartikels in der Weise, daß während des Garungsprozesses soviel Dampf im Inneren des Lebensmittelartikels erzeugt wird, daß die Flächen der ersten und zweiten Schicht im mittleren Bereich auseinanderstreben, dabei aber die Bindung zwischen den aufeinanderliegenden Außenkanten des geformten Lebensmittelartikels erhalten bleibt und ein einzelner, hohler, vollständig geschlossener und geformter Lebensmittelartikel entsteht.

2. Ein Verfahren nach Anspruch 1, nach dem zwischen dem Formungsschritt (d) und dem Garungsschritt (e) der Lebensmittelartikel getrocknet wird, so daß der geformte Lebensmittelartikel die Form eines stabilen, ungegarten Snackpellets erhält, der sich für Lagerung und Transport eignet.

3. Ein Verfahren nach dem oben genannten Anspruch, nach dem das aus Schichten aufgebaute Material durch Extrudieren zu einem Schlauch geformt und anschließend verflacht wird.

4. Ein Verfahren nach dem oben genannten Anspruch, nach dem der geformte Lebensmittelartikel 10 bis 300 Sekunden lang durch Backen in siedendem Öl bei einer Temperatur von 160° C bis 200° C gegart wird.

5. Eine Methode nach Anspruch 1, nach der das stärkehaltige Material Kartoffelfeststoff ist; der Feuchtegehalt des geformten Lebensmittelartikels beträgt vor dem Garen 30 bis 50 Gewichts-Prozent und die erste und zweite Schicht hat eine Stärke von jeweils 0,1 bis 1,0 mm.

6. Ein Verfahren nach dem oben genannten Anspruch, nach der das stärkehaltige Material eine Mischung von Granulat, Flocken oder Stärken aus mindestens einem Gemüse oder Getreide enthält.

7. Ein Verfahren nach einem der Ansprüche 1 bis 5, nach dem das stärkehaltige Material eine Mischung von Granulat, Flocken und Stärken aus Kartoffeln enthält.

## Revendications

1. Méthode de fabrication de différents articles alimentaires creux, entièrement fermés et formés, comprenant les étapes suivantes:
(a) Préparation d'un mélange composé d'une matière féculente et d'eau;
(b) Roulage ou moulage par injection de ce mélange avec pression suffisante pour mise en forme de la première et deuxième couche de matière avec introduction d'une liaison pontée à l'hydrgène (rétrogradation) entre les molécules d'amylose dans la matière féculente pour formation d'une matrice à partir de ladite matière féculente et de l'eau. Il convient de lier un nombre suffisant de molécules d'amylose de manière à ce que les surfaces des couches de matière ne collent pas entre elles quand celles-ci sont amenèes en contact avec le côté opposé de l' autre couche de matière.
(c) Mise en form d'une matière composée de plusieurs couches par application directe du côté opposé respectif de la première et deuxième couche;
(d) Mise en form d'une article alimentaire formé mais non cuit par découpage et mise en forme de la matière composée de plusieurscouches, une étachéité et liaison absolues des couches superposées devant être assurées tout le long de l'arête extérieure;
(e) Cuisson du produit alimentaire formé de manière à produire durant le processus de cuisson assez de vapeur à l'intérieur du produit alimentaire pour que les surfaces des première et seconde couches aient tendance à s'écarter dans la partie médiane l'une par rapport à l'autre, tout en veillant à ce que la liaison entre les arêtes extérieures, se trouvant l'une sur l'autre, du produit alimentaire formé soit maintenue, et qu'il se forme un seul produitalimentaire, creux, entièrement fermé et formé.

2. Méthode selon point 1 de la spécification, d'après lequel la denrée alimentaire est, l'etape de mise en forme (d) et la cuisson (e), séchée de manière à ce que la denrée formée prenne la forme d'une boulette (snack pellet) solide, non cuite, mais convenant au stockage et au transport.

3. Méthode selon la spécification susmentionée selon laquelle la matière formée de plusieurs couches est, par moulage par injection, transformée en un tuyau qui s' aplatit ensuite.

4. Méthode selon la spécification citée ci-dessous d' après laquelle on fait cuire au four le produit alimentaire formé durant 10 à 300 secondes dans de l'huile boullante à une température comprise entre 160° et 200° C.

5. Méthode selon le point 1 de la spécification, d'après laquelle la matière féculente est une matière solide à base de pommes de terre; la teneur en eau de la denrée alimentaire formée est, avant la cuisson, de 30 à 50 pour-cent en poids, et la première et deuxième couche à une épaisseur respective de 0,1 à 1,0 mm.

6. Méthode selon la spécification précitée d'après laquelle la matière féculente comprend un mélange de granulat, de flocons ou d'amidons constitué au moins à partir d'un légume ou d'une céréale.

7. Méthode selon un des points 1 à 5 de la spécification, d'après laquelle la matière féculente comprend un mélange de granulat, de flocons ou d'amidons à base de pommes de terre.
